# EUROPEAN PATENT APPLICATION

(11) **EP 2 454 967 A1**
(43) Date of publication of application: **23.05.2012**
(21) Application number: 11009142.8
(22) Date of filing: 17.11.2011
(51) Int. Cl.: A46B 7/04

(54) **Oral care implement**

(30) Priority: 19.11.2010 EP 10014790
(71) Applicant: Braun GmbH, 61476 Kronberg (DE)
(72) Inventor: Fritsch, Thomas, 65817 Eppstein (DE)

(57) **Abstract**

An oral care implement that has a housing (101E), a carrier element (102E) mounted for movement relative to the housing, a locking assembly for preventing separation of the carrier element from the housing, wherein the locking assembly either has at least a first locking element (113) that is supported at the housing at a first support location (133) and a second support location (134) and that engages into a first aperture or recess (123) of the carrier element or at least a first locking element (110; 111) that is supported at the housing at a first support location (130; 131) and that engages into a first aperture or recess (120; 121) of the carrier element and a second locking element (103; 162A; 112) that is arranged for locking the carrier element and the housing.

## Description

### FIELD OF THE INVENTION

The present invention is concerned with an oral care implement and in particular with an oral care implement that comprises a housing and a carrier element mounted for movement relative to the housing.

### BACKGROUND OF THE INVENTION

Oral care implements are known that have a carrier element mounted for movement relative to the housing, where the oral care implement is realized as a replacement brush head for an electric toothbrush and the carrier element is realized as a bristle carrier mounted for oscillating rotation. It is further known to secure the carrier element to the housing by using a locking pin that is supported at the housing and that engages into an aperture or recess in the carrier element in order to prevent that the movably supported carrier element can get separated from the housing in case a pull-off force acts on the carrier element. The latter can happen in particular when the oral care implement is dropped to the floor or when a user jams the oral care implement in the mouth. Leverage forces acting on the locking pin may lead to rip out the locking pin.

Thus it is a desire to provide an oral care implement having an improved locking of a movably mounted carrier element.

### SUMMARY OF THE INVENTION

The above desire is satisfied by an oral care implement in accordance with the independent claims. Further embodiments are defined by the dependent claims.

In accordance with at least one aspect, an oral care implement is provided that comprises a housing, a carrier element mounted for movement relative to the housing, a locking assembly for preventing separation of the carrier element from the housing, wherein the locking assembly comprises at least a first locking element being supported at the housing at a first support location and a second support location and engaging into a first aperture or recess of the carrier element, and wherein an unsupported length of the first locking element is at least twice a supporting length that the first locking element is supported by the housing.

In accordance with at least one aspect, an oral care implement is provided that comprises a housing, a carrier element mounted for movement relative to the housing, a locking assembly for preventing separation of the carrier element from the housing, wherein the locking assembly comprises at least a first locking element being supported at the housing at a first support location and engaging into a first aperture or recess of the carrier element and a second locking element arranged for locking the carrier element and the housing, and wherein the second locking element is supported at the carrier element. In some embodiments the second locking element may be an integral part of the carrier element that engages into a second aperture or recess provided at the housing.

In accordance with an aspect of the present disclosure, the oral care implement may be realized as a replacement brush head for an electric toothbrush.

### BRIEF DESCRIPTION OF THE DRAWINGS

The present disclosure will be further elucidated by a detailed explanation of exemplary embodiments and with reference to figures. In the figures
- Fig. 1: is a depiction of an oral care device realized as an electric toothbrush having an oral care implement realized as a replaceable brush head;
- Fig. 2: is a depiction of an oral care implement realized as a replaceable brush head for an electric toothbrush;
- Fig. 3: is a longitudinal cut through a brush head as shown in Fig. 2 where a locking assembly comprises a first locking element engaging into a first aperture or recess;
- Fig. 4: is a longitudinal cut through another embodiment of a brush head in accordance with the present disclosure, where the locking assembly comprises a first and a second locking element, where the second locking element is integral with a carrier element;
- Fig. 5: is a longitudinal cut through the head section of a further embodiment of a brush head in accordance with the present disclosure, where the locking assembly comprises a first and a second locking element, where the second locking element is realized as an extension of a metal axle to which a shaft element is mounted;
- Fig. 6: is a top view onto the head section of an electric toothbrush that comprises a carrier element that is movably mounted;
- Fig. 7: is a cross sectional cut through a first embodiment of the brush head shown in Fig. 6 along plane A-A indicated in Fig. 6 where the locking assembly comprises a first locking element;
- Fig. 8: is a cross sectional cut through a further embodiment of the brush head shown in Fig. 6 along plane A-A indicated in Fig. 6 in accordance with the present disclosure, where the locking assembly comprises a first and a second locking element;
- Fig. 9A: is a longitudinal cut through another embodiment of the brush head shown in Fig. 6 along plane B-B indicated in Fig. 6 in accordance with the present disclosure, where the locking assembly comprises a first locking element that is supported at the housing at a first and a second support location;
- Fig. 9B: is a longitudinal cut through the brush head shown in Fig. 9A along plane D-D indicated in Fig. 9A.

### DETAILED DESCRIPTION OF THE INVENTION

Oral care implements such as electric toothbrushes need to be in conformance with respective standards such as the communicated EN 60335-2-52/A11 ("*Particular requirements for oral hygiene appliances*"). According to this standard, an appliance needs to survive a fall from 700 mm height onto a hardwood board without damage (it is referred to the documents available e.g. via CENELEC). In particular, the fall may apply a force onto movably mounted parts of the toothbrush, e.g. movably mounted (bristle) carrier elements. These movably mounted parts may get separated from the toothbrush if the applied force is above a threshold pull-off force. It is known in the art to lock a movably arranged carrier element by a locking assembly comprising a locking element, e.g. a metal pin that is press fitted into a bore in the brush head housing, which locking element further engages into an aperture or recess provided in the carrier. A fall from 700 mm may apply a force onto the carrier element such that the locking element is ripped out of the housing (i.e. the electric toothbrush gets damaged and the carrier element gets separated), in particular as a leverage force may act on the locking element. According to one aspect of the present disclosure, improvements are described that are intended to avoid or at least reduce the probability that such damages occur easily. Improved locking has also the further effect that a slowly acting threshold pull-off force, as may occur when e.g. a user jams a tooth under the movably mounted carrier element, will also not lead to easy separation of the carrier element from the housing.

In the following, several embodiments of the proposed oral care implement are described. An oral care implement in accordance with the present disclosure may either be an oral care device such as an electric toothbrush or an oral care implement may be a replacement head for an oral care device such as a replacement brush head for an electric toothbrush.

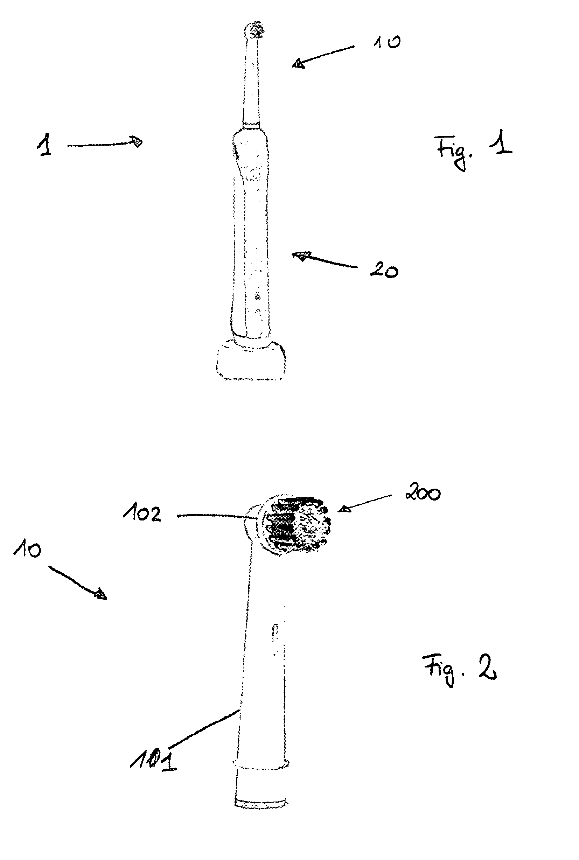

Fig. 1 is a depiction of an exemplary embodiment of an oral care device realized as an electrical toothbrush having a handle 20 and a detachably arranged head section that here is realized as a brush head 10. In the following, exemplary embodiments will be discussed where the oral care implement is realized as a replaceable brush head of an electric toothbrush. This should not be interpreted to limit the scope of the present disclosure.

Fig. 2 is a depiction of an exemplary oral care implement as proposed realized as a replaceable brush head 10. The brush head 10 has an essentially tubular housing 101 to which at a distal end a movably arranged carrier element 102 is mounted. A bristle tuft field 200 is mounted to the carrier element 102, using mounting technology as is known in the art, e.g. anchor tufting, AFT (anchor free tufting) or any other technology.

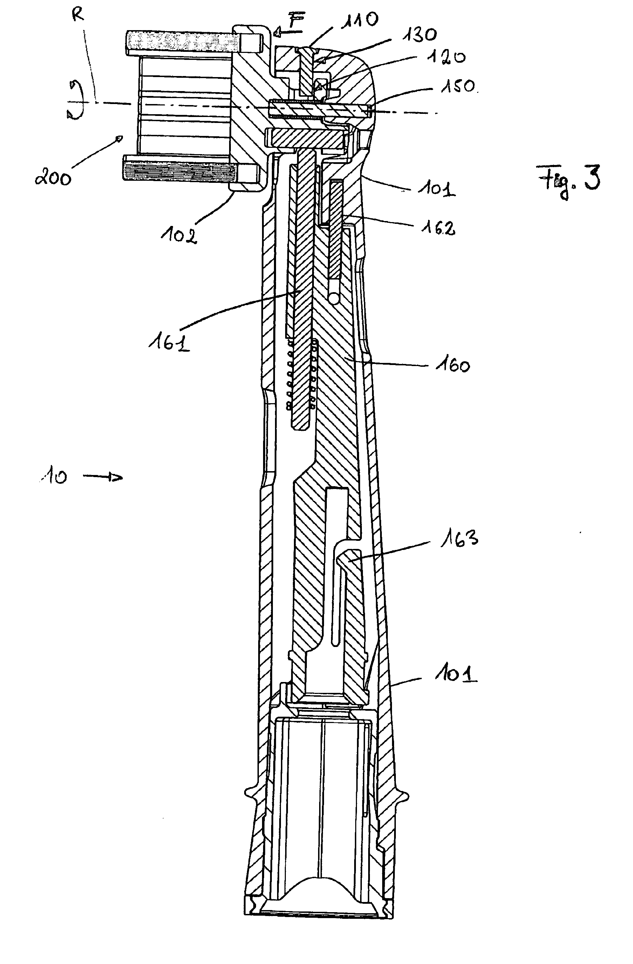

Fig. 3 shows a longitudinal cut through a brush head 10 as shown in Fig. 2. The brush head 10 has an essentially tubular housing 101 that extends in a longitudinal direction. The tubular housing 101 has an opening at a proximal side that is arranged so that a drive shaft of a handle section of an electrical toothbrush can be slid into the opening until a snap hook 163 of a shaft element 160 snaps into a groove of the drive shaft, as is known in the art. A carrier element 102 is movably mounted to the distal end of the brush head 10. The carrier element 102 is mounted on an axle 150 so that the carrier element 102 can rotate (or oscillate in a rotating manner) around rotation axis R defined by the axle 150. Carrier element 102 is mechanically coupled to the shaft element via a T-shaped coupling element 161 to transfer an oscillatory rotation of the drive shaft around the longitudinal axis via the shaft element 160 into an oscillatory rotation of the carrier element 102 around rotation axis R. The shaft element 160 is further mounted to the housing 101 with a mounting pin 162 that extends along the longitudinal direction. Here, the rotation axis R is essentially perpendicular to the longitudinal direction. In the shown embodiment, the carrier element 102 extends beyond the housing 101 in such a way that during regular operation, a force F could become applied at the carrier element 102 such that the carrier element 102 could become separated from the housing 101. The force at which the separation occurs is the threshold pull-off force. Such instances may in particular occur when the brush head 10 is dropped to the floor or when a user (e.g. a child) jams a tooth between the carrier element 102 and the housing 101. In order to prevent that the carrier element 102 can get easily separated (and thus could get e.g. swallowed), a locking assembly is provided, which locking assembly is in the shown embodiment realized as a first locking element 110 that is supported at the housing 101 at a first support location 130 such that the first locking element 110 (here realized as a metal locking pin having a broadened head, i.e. a mushroom head) is fixedly connected to the housing, e.g. the first locking element 110 may be press-fitted into a bore in the housing 101. The first locking element 110 extends beyond the first support location and engages into a first aperture or recess 120 in the carrier element 102.

It is now sensible to design the locking assembly in such a way that the threshold pull-off force is as high as possible so that the brush head is not damaged and/or the carrier element is not separated.

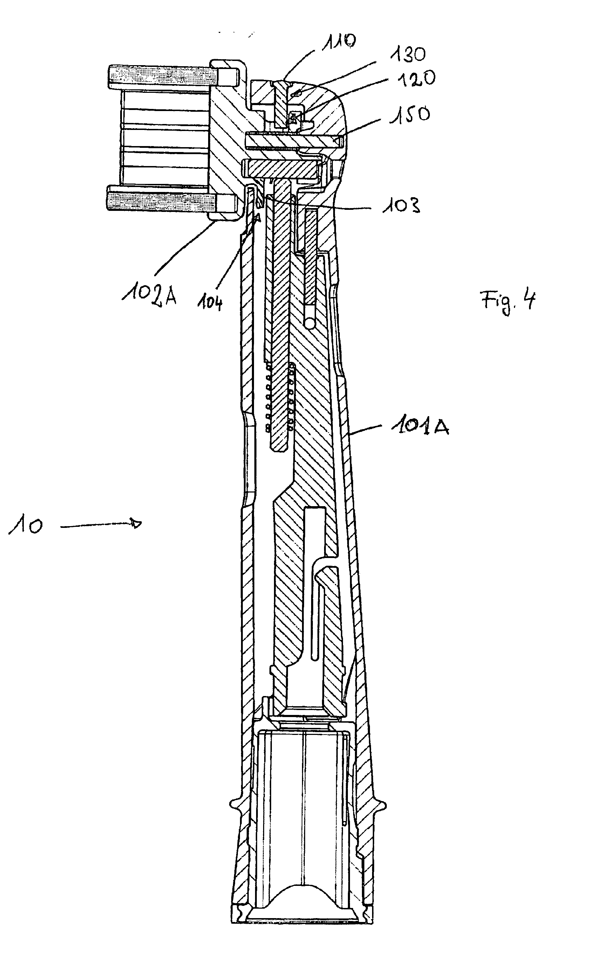

In Fig. 4 essentially the same longitudinal cut as in Fig. 3 is shown, but Fig. 4 shows one exemplary embodiment of a locking assembly that is improved over the locking assembly shown in Fig. 3. Elements essentially identical to element in Fig. 3 will not be described again and reference is made to the description relating to Fig. 3. Besides the first locking element 110 that was already described in detail with reference to Fig. 3, a second locking element 103 is provided. The second locking element 103 is here realized as a locking element that is fixedly mounted at the carrier element 102A, in particular, the second locking element 103 may be an integral part of the carrier element 102A (e.g. the second locking element 103 may be molded in the injection molding process of the carrier element). In another embodiment, the second locking element may be realized as a metal pin that is press-fitted into a bore provided in the carrier element. The second locking element 103 extends into a recess or aperture 104 provided in the housing 101A. Here, the housing 101A provides the recess by its hollow inner part. The second locking element 103 just grips behind the housing wall. A force acting onto the carrier element 102A would not only have to overcome the locking strength of the first locking element 110 but also the locking strength of the second locking element 103. The use of a second locking element also reduces leverage forces acting on the locking elements when a pull-off force is applied.

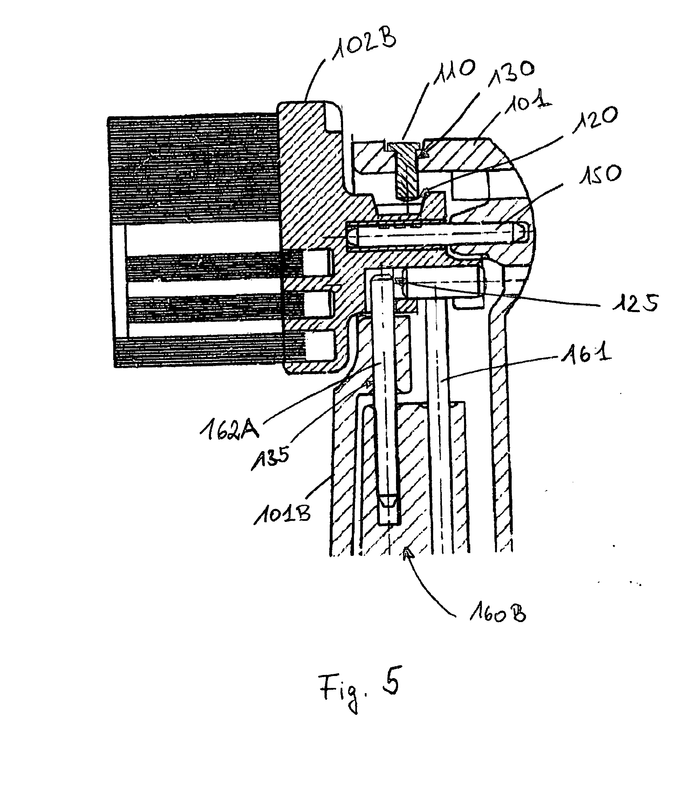

Fig. 5 shows a further embodiment of a locking assembly provided in a brush head similar to the brush head shown in Fig. 3. The brush head shown in Fig. 5 comprises as part of its locking assembly the first locking element 110 supported at a first support location 130 at the housing 101B that engages into a first aperture or recess 120 in the carrier element 102B as was discussed in detail with reference to Fig. 3. In addition, the locking assembly of the brush in accordance with Fig. 5 comprises a second locking element 162A. In this embodiment, the second locking element 162A is integral with the mounting pin to mount the shaft element 160B at the housing 101B. The second locking element 162A is realized by prolonging the mounting pin such that it on one end provides the mount for the shaft element 160B and on the second end engages into a second aperture or recess 125 formed in the carrier element 102B. The second locking element 162A (here realized as a locking pin, in particular as a metal locking pin) is supported at a second support location 135 at the housing 1O1B.

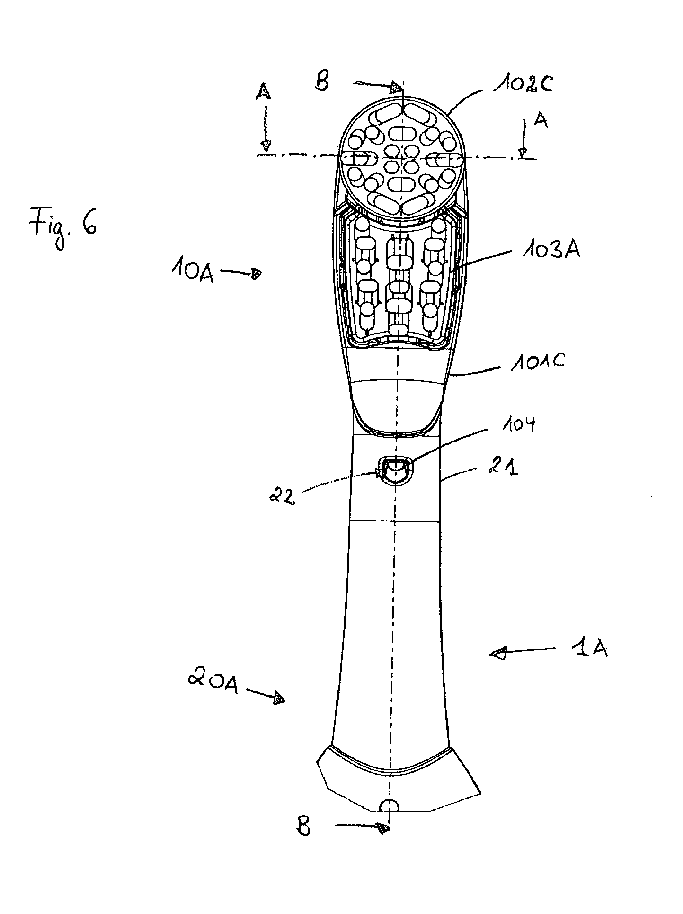

Fig. 6 is a partial depiction of another embodiment of an oral care implement 1A as proposed. Here, the oral care implement is again realized as an electric toothbrush that comprises a handle section 20A (only partially shown) and a head section realized as a replaceable brush head 10A. The replaceable brush head 10A comprises a housing 101C that is - inter alia- attached to the housing 21 of the handle section 20A via a snap hook 104, which snap hook 104 has a snap nose that engages into a cutout 22 provided in the housing 21 of the handle section 20. The brush head 10A further comprises a carrier element 102C mounted for oscillatory rotation similar to the carrier element 102 of the previous embodiments. The brush head 10A here also comprises an additional carrier element 103A.

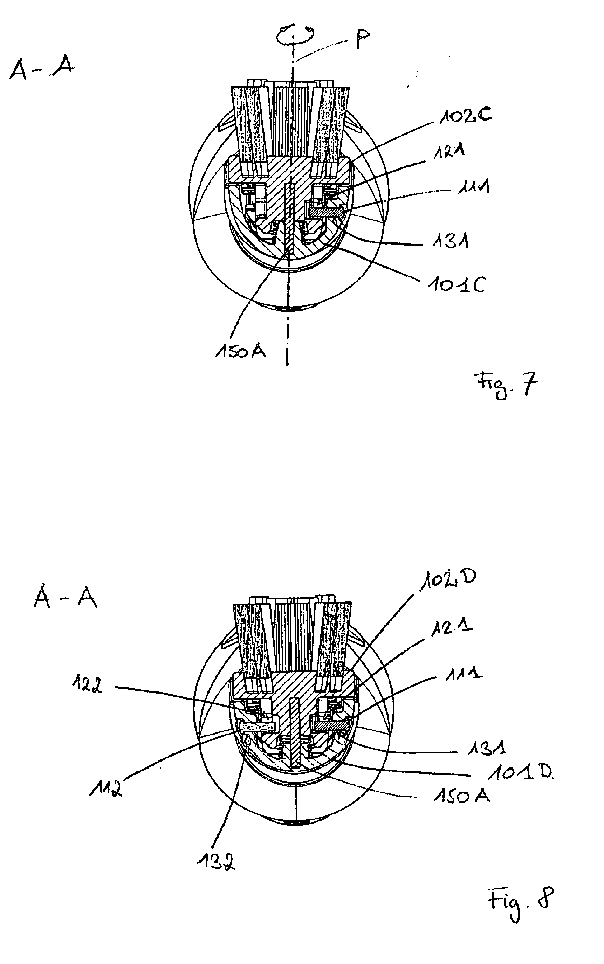

Fig. 7 is a cross sectional cut through the oral care implement 1A shown in Fig. 6 taken along plane A-A as indicated in Fig. 6. The carrier element 102C is mounted on an axle 150A for oscillatory rotation around rotation axis P. A locking assembly as provided in this embodiment comprises, similar to the embodiment shown in Fig. 3, a first locking pin 111 that is supported at the housing 101C of the brush head at a first support location 131 and that engages into a first aperture or recess 121 formed in the carrier element 102C.

Fig. 8 is the same cross sectional cut as shown in Fig. 7 but of a different embodiment of the brush head in accordance with the present disclosure. Here, the locking assembly comprises a first locking element 111 supported at a first support location 131 at the housing 101D that engages into a first aperture or recess 121 formed in the carrier element 102D. In addition, the locking assembly comprises a further locking element 122 supported at the housing 101D at a second support location 132 at the housing 101D that engages into a second aperture or recess 122 formed in the carrier element 102D. Here, the first and second support locations 131 and 132 are opposite to each other with respect to the carrier axis defined by the axle 150A, i.e. the angular distance of the two support locations with respect to the rotation axis is 180 degrees.

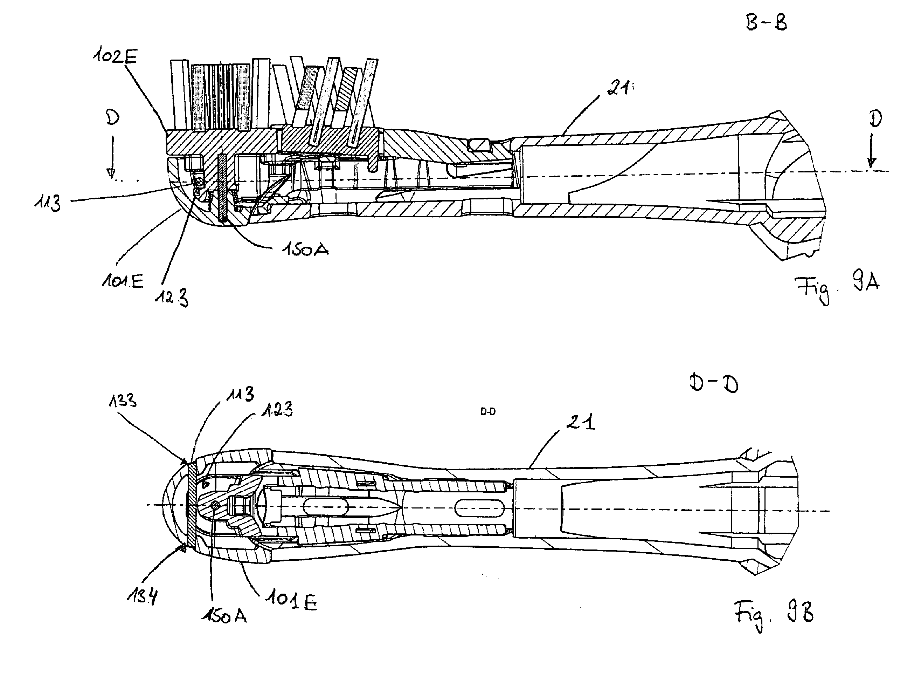

Fig. 9A is a longitudinal cut through another embodiment of an oral care implement. A carrier element 102E is movably mounted on an axle 150A for oscillatory rotation. A locking assembly is provided that in this embodiment comprises a first locking element 113 that engages into a first aperture or recess 123 formed in the carrier element 102E. In Fig. 9B, which is a longitudinal cut through the same embodiment as shown in Fig. 9A but along plane D-D indicated in Fig. 9A, it is shown that the first locking element 113 is supported at the housing 101E at one end at a first support location 133 and at a second end at a second support location 134. In this embodiment, the double-sided support of the locking element 113 results in strong locking as the forces acting on the locking element 113 are absorbed by the two support locations and leverage force effects are effectively reduced. The first and second support location lie offset to the rotation axis of the carrier element 102E, so that the angular distance between the two support locations is around 110 degrees.

An unsupported length of a first locking element being supported at two support locations (e.g. at a first support location 133 and a second support location 134 as shown in Fig. 9B), i.e. the length of the first locking element that freely extends between the two support location, is at least twice the length that the first locking element is supported by the housing in the two supporting locations. The supporting length, i.e. the length that the first locking element is supported in the housing may in some embodiments be between about 3.0 mm (i.e. two times about 1.5 mm) and about 6.0 mm (i.e. two times about 3.0 mm). Sacrificing supporting length for the benefit of unsupported length allows using the hollow inside the housing more efficiently for gearing elements etc. On the other hand, reducing supporting length too much may result in an unsatisfying pull-off force. The unsupported length of the first locking element may be between about 6.0 mm to about 15 mm. The diameter of the first locking element may be between about 0.5 mm to about 2.0 mm, in particular between about 0.7 mm to about 1.5 mm. The supporting length of each support location may in some embodiments be chosen to be about at least twice the diameter of the first locking element. In some embodiments, the first locking element may be realized as a metal pin, in particular the first locking element may be made from hardened steel in order to reduce abrasion.

Using a single first locking element supported at two support locations also reduces leveraging forces acting on the first locking element when a pull-off force acts on the carrier element. In particular, such a design effectively avoids leveraging forces.

Utilizing the above described improved locking assemblies will also support making use of a soft plastic material for the housing, e.g. a plastic material having a tensile strength of less than about 2500 N/mm². Choosing a relatively strong (and typically expensive) plastic material such as POM (polyoxymethylene), PBT (polybutylene terephthalate) or PA (polyamide) as material of the housing will result in a certain threshold pull-off force that is given by the details of the design (e.g. wall thickness, shape of the locking elements, material of the locking elements etc.), but which also benefits from the strength of the plastic material. Choosing a softer plastic material such as ABS (acrylonitrile-butadiene-styrene), ASA (acrylonitrile-styrene-acrylate) or PP (polypropylene) will obviously result in a lower threshold pull-off force for the same design. Hence, using the improved locking assemblies together with soft plastic material as housing material will result in an increase of the threshold pull-off force in comparison to a single locking element or single support location, respectively, as shown e.g. in Fig. 3 or Fig. 7. Use of softer plastic material as ABS, ASA, or PP also allows using certain thermoplastic elastomer materials (TPE) that adhere well to the mentioned soft plastic materials but often not to the mentioned hard plastic materials. Structures such as a tongue cleaner may then be realized using a two-component or multi-component plastic injection molding process.

Further measures to improve the locking behavior of the locking assembly may include thickening the wall of the housing around the first and/or second support location or making use of reinforced plastic material (optionally only locally e.g. for the support locations or for the second locking element that is integral with the carrier element).

In accordance with at least one aspect, an oral care implement comprises a housing, a carrier element mounted for movement relative to the housing, a locking assembly for preventing separation of the carrier element from the housing wherein the locking assembly comprises at least a first locking element being supported at the housing at a first support location and a second support location and engaging into a first aperture or recess of the carrier element.

In accordance with at least an aspect, an oral care implement comprises a housing, a carrier element mounted for movement relative to the housing, a locking assembly for preventing separation of the carrier element from the housing, wherein the locking assembly comprises at least a first locking element being supported at the housing at a first support location and engaging into a first aperture or recess of the carrier element and a second locking element arranged for locking the carrier element and the housing.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An oral care implement, comprising:
a housing (101E);
a carrier element (102E) mounted for movement relative to the housing;
a locking assembly for preventing separation of the carrier element from the housing;
wherein the locking assembly comprises at least a first locking element (113) being supported at the housing at a first support location (133) and a second support location (134) and engaging into a first aperture or recess (123) of the carrier element; and
wherein an unsupported length of the first locking element is at least twice a supporting length that the first locking element is supported by the housing.

2. The oral care implement according to claim 1, wherein the supporting length of the housing at the first support location and at the second support location, respectively, is less than about four times the diameter of the first locking element, wherein the diameter is measured at the respective support location, in particular wherein the thickness of the housing at the first support location and the second support location, respectively, is less than about 4 mm.

3. The oral care implement according to claim 1 or 2, wherein the unsupported length of the first locking element is between about 6.0 mm to about 15.0 mm,

4. An oral care implement, comprising:
a housing (101A; 101B, 101D);
a carrier element (102A; 102B, 102D) mounted for movement relative to the housing;
a locking assembly for preventing separation of the carrier element from the housing;
wherein the locking assembly comprises at least a first locking element (110; 111) being supported at the housing at a first support location (130; 131) and engaging into a first aperture or recess (120; 121) of the carrier element and a second locking element (103, 162A, 112) arranged for locking the carrier element and the housing; and
wherein the second locking element (103) is supported at the carrier element (102A), in particular wherein the second locking element (103) is an integral part of the carrier element and engages into a second aperture or recess (104) provided at the housing.

5. The oral care implement according to any one of claims 1 to 4, wherein the carrier element (102A; 102B, 102D; 102E) is mounted for rotational or oscillating rotational movement around a rotation axis (R), where in particular the rotation axis is arranged perpendicular to a longitudinal direction of the oral care implement.

6. The oral care implement according to claim 5, wherein the first support location (130; 131) and the second support location (135; 132) are arranged at an angular distance of at least 30 degrees with respect to the rotation axis (R).

7. The oral care implement according to any one of claims 1 to 6, wherein the material of the housing has an E-module, i.e. a tensile strength, of below 2500 N/mm², where the material is in particular one of the group of polypropylene, acrylonitrile-butadiene-styrene, and acrylonitrile-styrene-acrylate.

8. The oral care implement according to any one of claims 1 to 7, wherein the first locking element (110; 111) is realized as a cylindrical metal pin, in particular made from hardened steel.

9. The oral care implement according to any one of claims 1 to 8, wherein the first locking element (110; 111) has a diameter measured at the first and/or second support location of between about 0.5 mm to about 2.0 mm, in particular of between about 0.7 mm to about 1.5 mm.

10. The oral care implement according to any one of claims 1 to 9, wherein the threshold pull-off force (F) is at least 35 Newton, in particular at least 45 Newton, even more particularly at least 90 Newton.

11. The oral care implement according to any one of claims 1 to 10, wherein the carrier element at least partly extends beyond the housing.

12. The oral care implement according to any one of claims 1 to 11, wherein the first locking element (110; 111) is press fitted into the housing.

13. The oral care implement according to any one of claims 1 to 12, wherein the housing is reinforced and/or thickened at least at the first support location.

14. The oral care implement according to any one of claims 1 to 13, wherein the oral care implement is realized as a replacement head for an electric oral care device, in particular as a replacement brush head for an electric toothbrush.
